# EUROPÄISCHE PATENTSCHRIFT

(11) **EP 3 348 145 B1**
(45) Veröffentlichungstag und Bekanntmachung des Hinweises auf die Patenterteilung: **18.03.2020**
(21) Anmeldenummer: 17151355.9
(22) Anmeldetag: 13.01.2017
(51) Int. Cl.: A21C 11/04, A21C 11/10

(54) **VERFAHREN UND SYSTEM ZUR FERTIGUNG VON TEIGSNACKPRODUKTEN**
METHOD AND SYSTEM FOR THE MANUFACTURE OF DOUGH SNACK PRODUCTS
PROCÉDÉ ET SYSTÈME DE FABRICATION D'EN-CAS À BASE DE PÂTE

(43) Veröffentlichungstag der Anmeldung: 18.07.2018
(73) Patentinhaber: Intersnack Group GmbH & Co. KG, 40468 Düsseldorf (DE)
(72) Erfinder: Back, Andrea, 40221 Düsseldorf (DE)
(74) Vertreter: Becker & Kurig Partnerschaft Patentanwälte PartmbB

(56) Entgegenhaltungen:
- WO-A1-2007/050995
- ES-T3- 2 549 878
- FR-A5- 2 165 275
- US-A- 3 724 980
- US-A- 5 127 292
- US-A- 5 306 133

## Beschreibung

### Gebiet der Erfindung

Die vorliegende Erfindung betrifft ein Verfahren und ein System zur Fertigung von Stapelchips mit ausgestochenen Innenteilen. Insbesondere betrifft die vorliegende Erfindung ein Verfahren und ein System zur Fertigung von Stapelchips, wobei die Stapelchips spezielle innenliegende Öffnungen aufweisen.

### Stand der Technik

Auf dem Markt sind gebackene Teigsnackprodukte bereits bekannt. Ein Beispiel dafür sind die so genannten Stapelchips, die den herkömmlichen Kartoffelchips ähneln. Sie werden z.B. aus Kartoffelpüree oder Kartoffelpüreepulver hergestellt. Die grundlegende Zubereitung ist der in der vorliegenden Erfindung weitestgehend identisch. Insbesondere wird herkömmlicherweise und auch in der vorliegenden Erfindung aus geeigneten Rohstoffen, wie zum Beispiel Kartoffelpüree oder Kartoffelpüreepulver, ein teigähnliches Zwischenprodukt ausgewalzt, der Umriss des fertigen Stapelchips ausgestochen und dieser - in einer besonderen Halterung fixiert - frittiert, gewürzt und verpackt. Diese bekannte Produktionsweise ermöglicht es, den Chips eine gleichmäßige Form zu geben, sodass sie gestapelt verpackt werden können.
Stapelchips wurden vor allem deswegen entwickelt, um lagerungsbedingten Qualitätsschwankungen des Produktes zu begegnen, da das entwässerte stärkehaltige Pulver (z.B. Kartoffelpüreepulver) deutlich besser lagerfähig ist als die nicht verarbeiteten Rohstoffe (z.B. Kartoffeln). Darüber hinaus ist wegen des geringeren Feuchtigkeitsgehaltes des Pürees der spezifische Energiebedarf der Produktion von Stapelchips geringer als bei der Kartoffelchipproduktion. Dies hat auch einen geringeren Fettgehalt von Stapelchips im Vergleich zu herkömmlichen Kartoffelchips zur Folge, da die Verweilzeit der Stapelchips in der Fritteuse kürzer ist.

Die vorliegende Erfindung dient der Bereitstellung eines neuen Herstellungsverfahrens für Stapelchips und ähnliche Snackprodukte, das eine wirtschaftliche Wiederverwertung von Rohstoffen und neuartige Designansätze ermöglicht.

US 3 724 980 A offenbart eine Vorrichtung zum Ausschneiden von teigformen mit innenausschnitten aus einem Teigband. Teile der Vorrichtung umfassen ein erstes Walzenpaar, ein zweites Walzenpaar, das von dem ersten Walzenpaar beabstandet ist, und ein endloses Trägerband, das das Teigband trägt und es zwischen jedem der Walzenpaare befördert. Jedes der Walzenpaare besteht aus einer Schneidwalze mit umlaufenden Stanzelementen und einer Anpresswalze. Die Stanzelemente an der Schneidwalze des ersten Walzenpaares schneiden die inneren Ausschnitte der Teigformen aus dem sich bewegenden Teigband aus, und die Stanzelemente an der Schneidwalze des zweiten Walzenpaares schneiden die äußeren Formen des Teigs aus Formen. Wenn das Trägerband das Teigband zwischen jedem Walzenpaar befördert, steht die Andruckwalze mit den Schneidkanten der Stanzelemente der Schneidwalze dieses Walzenpaars in Druckkontakt. Die Stanzelemente an der Schneidwalze des ersten Walzenpaars halten die inneren Ausschnitte der Teigformen zurück, wenn sie vom Kontakt mit dem Teigband wegrollen, und ein Gebläse, das neben dieser Walze positioniert ist, bläst diese inneren Ausschnitte in das Innere der Walze durch Öffnungen in der Walzenwand.

WO 2007/050995 A1 offenbart ein rotierendes Schneidwerkzeug zum Schneiden einer sich bewegenden Materialbahn in Rohlinge und Abfallmaterial. Das Schneidwerkzeug umfasst eine obere Schneidanordnung mit einem oberen Schneidelement, das einen Ausschnittbereich an der oberen Schneidanordnung definiert, eine untere Schneidanordnung mit einem unteren Schneidelement, wobei das obere Schneidelement und das untere Schneidelement zusammenwirken können, um die sich bewegende Materialbahn in Rohlinge und Abfallmaterial zu schneiden, und einen Abfallauswurf an der oberen Schneidanordnung an dem Ausschnittbereich.

US 5306133 A offenbart ein Teigverarbeitungssystem zum Teilen einer Teigbahn in mehrere getrennte Abschnitte und zum Transportieren jedes Abschnitts in eine vorbestimmte Richtung. Ein Rotationsschneider mit einer Vielzahl von daran befestigten Schneidwerkzeugen teilt die Teigbahn. Die Schneidwerkzeuge haben eine äußere periphere Schneidkante zum Schneiden der linearen Teigbahn in zwei oder mehr lineare Abschnitte zur Weiterverarbeitung auf Standardfördersystemen und eine innere periphere Schneidkante zum Schneiden eines inneren Abschnitts von dem Snackstückteig. Der Rotationsschneider weist eine innere Spiralschnecke auf, die starr an einem äußeren zylindrischen Dorn befestigt ist, an dem ein erstes und ein zweites Ende und eine Vielzahl von Schneidwerkzeugen angebracht sind.

### Kurze Beschreibung der Erfindung

Die vorliegende Erfindung wird durch die beigefügten Ansprüche bereitgestellt. Demgemäß stellt die vorliegende Erfindung ein Verfahren und ein System zur Herstellung von Stapelchips bereit, welche eine Variation von Form und Größe des Stapelchips ermöglichen.

Insbesondere umfasst ein Verfahren zum Bilden von Stapelchips aus mindestens einem Rohstoff mit ausgestochenen Öffnungen gemäß einer bevorzugten Ausführungsform der vorliegenden Erfindung das Bereitstellen einer Teigbahn auf einem Transportband bzw. Laufband. Der Teig wird dabei im Wesentlichen auf herkömmliche Art und Weise produziert. In der Regel wird eine Teigbahn aus einem Rohstoffpulver, z.B. Kartoffelpüree oder Kartoffelpüreepulver und auf dem Laufband aufgebracht, bevorzugt fährt das Laufband unter entsprechend eingestellten Walzen hinweg, so dass die entstandene Teigbahn direkt weiter bearbeitet werden kann.

Es sei angemerkt, dass die nun folgende Beschreibung bevorzugt Kartoffelpulver oder Kartoffelpüreepulver als Rohstoffbasis angibt. Jedoch sollte verstanden werden, dass die vorliegende Erfindung nicht auf Kartoffelprodukte beschränkt ist. Gleichermaßen können andere Quellen für stärkehaltiges Pulver bzw. einen stärkehaltigen Teig als Grundlage für das erfindungsgemäße Verfahren verwendet werden. Gleichwertige Rohstoffe sind beispielsweise Reis, Weizen, Mais und Süßkartoffel. Die Verarbeitung der Rohstoffe erfolgt zu einem Mehl oder einer Stärke als lagerfähiges Zwischenprodukt, die jeweils nativ oder vorgelatiniert sein können. Bevorzugte Ausgangsstoffe für die Erfindung sind z.B. Kartoffelpüreepulver bzw. Kartoffelpulver, Kartoffelstärke, jeweils nativ oder vorgelatiniert. Die Teigbahn wird anschließend in einem zweistufigen Ausstechverfahren weiterverarbeitet. Insbesondere wird die Teigbahn zunächst mittels des Laufbands zu einer ersten Ausstechvorrichtung transportiert. Die erste Ausstechvorrichtung sticht Teigöffnungen in der Teigbahn aus, wobei die ausgestochene Teigmasse bevorzugt mittels der ersten Ausstechvorrichtung von der Teigbahn wegtransportiert wird. Z.B. kann der ausgestochene Teig, wie weiter unten beschrieben, ins Innere der ersten Ausstechvorrichtung transportiert werden und von da aus mittels einer relativ zu der Ausstechvorrichtung rotierbaren Schnecke abtransportiert und recycelt werden. Es sind jedoch auch andere Mechanismen denkbar, z.B. ein Auswurfmechanismus auf eine Rutsche oder ein abtransportierendes Laufband.
Die Teigbahn mit den Teigöffnungen wird durch das Laufband zu einer zweiten Ausstechvorrichtung transportiert und durch diese werden Teiglinge aus der Teigbahn ausgestochen, wodurch Teiglinge mit Umriss eines Stapelchiprohlings gebildet werden, wobei jeder Teigling mindestens eine durch die erste Ausstechvorrichtung ausgestochene Teigöffnungen aufweist. Abschließend werden die Teiglinge auf herkömmliche Art und Weise frittiert. Die Umrisse der Stapelchips sind in der vorliegenden Erfindung nicht begrenzt.

Die vorliegende Erfindung stellt ebenso ein System zur Herstellung von Stapelchips mit ausgestochenen Inneneilen bereit. Das System umfasst ein Laufband, das zur Aufnahme einer Teigbahn geeignet ist. Das System umfasst eine erste Ausstechvorrichtung, die weiterhin bevorzugt als erste Ausstechvorrichtung im obigen Verfahren fungiert. Diese erste Ausstechvorrichtung zum Bilden von Stapelchips umfasst eine Walze mit einer äußeren zylindrischen Trägerfläche, wobei die Walze im Bereich der Trägerfläche eine Vielzahl von Öffnungen aufweist. An der Walze ist eine Vielzahl von geschlossenen Ausstechwänden vorgesehen bzw. befestigt. Die Ausstechwände erstrecken sich von der Trägerfläche von der Walze weg nach außen. Jede Ausstechwand umgibt dabei jeweils einen Innenbereich, der mit mindestens einer der Öffnung in der Trägerfläche kommuniziert. Die Walze ist rotierbar und derart gelagert, dass der radial außen liegende Ausstechbereich der ersten Ausstechvorrichtung mit dem Laufband eingreift.

Die Ausstechvorrichtung ist mit Ausstechwänden ausgerüstet, die jeweils einen senkrechten Querschnitt aufweisen, der eine Ausstechwandinnenseite und eine Ausstechwandaußenseite umfasst. Die eine Ausstechwandinnenseite ist dem durch die Ausstechwand umgebenen Innenbereich zugewandt und erstreckt sich im Wesentlichen radial zur Walzenachse nach außen. Die Ausstechwandaußenseite ist dem durch die Ausstechwand umgebenen Innenbereich abgewandt und bezüglich der Ausstechwandinnenseite so geneigt, dass die Ausstechwandinnenseite und die Ausstechwandaußenseite bezüglich der Walzenachse außenliegend zusammentreffen.

Der Bereich, an dem die Ausstechwandinnenseite und die Ausstechwandaußenseite zusammentreffen ist der Bereich, der im Betrieb mit dem Laufband mit dem darauf befindlichen Bereich in Kontakt kommt, um Teile der Teigbahn auszustechen und wird im Folgenden als Ausstechrand bezeichnet. Die Neigung zwischen Ausstechwandinnenseite und Ausstechwandaußenseite ist dabei so gewählt, dass ein Winkel von 30° bis 65°, bevorzugt 40° bis 60°, besonders bevorzugt 45° bis 55° zwischen diesen eingeschlossen wird. Ein Vorsprung erstreckt sich von dem Ausstechrand im Wesentlichen senkrecht zur Ausstechwandinnenseite in Richtung des umschlossenen Innenbereichs. Durch den Vorsprung wird das Zurückströmen des ausgestochenen Teigs gehemmt.

Das System zur Herstellung von Stapelchips mit ausgestochenen Inneneilen gemäß der vorliegenden Erfindung umfasst außerdem eine zweite Ausstechvorrichtung mit einer zweiten Walze, die bezüglich der Laufrichtung des Laufbands nach der ersten Walze angeordnet ist, und die angepasst ist, um einen Umriss eines Stapelchiprohlings auszustechen. Das System umfasst ebenfalls eine bewegliche Garhalterung, die eine Vielzahl zylindrisch gewölbter Flächen mit jeweils mehreren Löchern aufweist und die angepasst ist, um die durch die erste Ausstechvorrichtung und die zweite Ausstechvorrichtung ausgestochenen Teiglinge mit Umriss eines Stapelchiprohlings kontinuierlich auf der zylindrisch gewölbten Fläche aufzunehmen. Das System gemäß der Erfindung enthält zudem eine Fritteuse, wobei die Garhalterung angepasst ist, um in die Fritteuse einzutauchen, so dass die ausgestochenen Teiglinge auf der Garhalterung frittiert werden.

In einer bevorzugten Ausführungsform des Verfahrens zum Bilden von Stapelchips gemäß der vorliegenden Erfindung werden die Teigöffnungen durch die Ausstechwand ausgestochen, wobei der ausgestochene Teig durch die Öffnungen in der Trägerfläche ins Innere der Walze transportiert wird, und wobei der Vorsprung der Ausstechwand den ausgestochenen Teig in dem Innenbereich hält und so verhindert, dass der Teig wieder aus dem Innenbereich hinausfließt.

Eine bevorzugte Ausführungsform des Verfahrens zum Bilden von Stapelchips gemäß der vorliegenden Erfindung umfasst weiterhin das Transportieren des durch die erste Ausstechvorrichtung ausgestochenen Teigs mittels eines in dieser befindlichen Schneckengewindes. Das Schneckengewinde ist bezüglich der Ausstechvorrichtung rotierbar gelagert und durch die relative Rotation dieser zueinander wird Teig vom Inneren der Ausstechvorrichtung seitlich abtransportiert. Der so aus der Ausstechvorrichtung abtransportierte Teig kann zur anfänglichen Teigbahnproduktion zurückgeführt werden. Dadurch werden die Produktionskosten der Stapelchips gesenkt.

In einer bevorzugten Ausführungsform des Systems der vorliegenden Erfindung umfasst der senkrechte Querschnitt jeder der Ausstechwände weiterhin eine Ausstechwandhalterungsseite, die sich zwischen der Ausstechwandaußenseite und der Trägerfläche der Walze erstreckt, wobei ein Winkel zwischen der Ausstechwandhalterungsseite und Ausstechwandinnenseite zwischen 5° und 20°, bevorzugt zwischen 7° und 15° beträgt. Es sei angemerkt, dass die Ausstechwandhalterungsseite und Ausstechwandinnenseite nicht wirklich aufeinandertreffen sondern streng genommen lediglich die Verlängerung der Ausstechwandhalterungsseite und der Ausstechwandinnenseite diesen Winkel einschließen. Alternativ kann sich die Ausstechwandhalterungsseite ähnlich wie die Ausstechwandinnenseite einfach radial zur Zylinderachse der Walze nach außen erstrecken.
In einer bevorzugten Ausführungsform des Systems der vorliegenden Erfindung umfasst die Ausstechwandinnenseite eine Antihaftbeschichtung. Die übrigen Teile der Ausstechwand, insbesondere diese, die im Betrieb direkt mit dem Teig in Kontakt kommen, können ebenso mit der Antihaftbeschichtung überzogen sein. Einzig die dem durch die Ausstechwand umschlossenen Innenbereich zugewandte Seite des Vorsprungs kann ohne Antihaftbeschichtung bereitgestellt sein, da eine solche Beschichtung in diesem Bereich eine erhöhte Wahrscheinlichkeit des Teigrückflusses aus dem Innenbereich zur Folge hätte.
In einer bevorzugten Ausführungsform des Systems der vorliegenden Erfindung umfasst die Walze innenliegend ein Schneckengewinde, das bezüglich der Walze rotierbar gelagert ist. Durch die relative Rotation von Walze und Schneckengewinde zueinander wird der ausgestochene, und ins Innere der Walze transportierte Teig seitlich aus der Walze abgeführt.
Die vorliegende Erfindung stellt ebenso die Verwendung einer Ausstechvorrichtung gemäß der obigen Beschreibung in einem Verfahren gemäß der obigen Beschreibung bereit.

### Kurze Beschreibung der Figuren

Im Folgenden wird die vorliegende Erfindung anhand von Figuren veranschaulicht, die schematisch Darstellungen nicht beschränkender Ausführungsformen darstellen. Es werden

### Kurze Beschreibung der Figuren

Im Folgenden wird die vorliegende Erfindung anhand von Figuren veranschaulicht, die schematisch Darstellungen nicht beschränkender Ausführungsformen darstellen. Es werden sowohl in den Zeichnungen als auch in der Beschreibung gleiche oder ähnliche Bezugszeichen für gleiche oder ähnliche Elemente und Komponenten verwendet.
Fig. 1A ist eine schematische Darstellung eines senkrechten Querschnitts durch eine Ausstechwand einer Ausstechvorrichtung gemäß einer Ausführungsform der vorliegenden Erfindung.
Fig. 1B ist eine vergrößerte schematische Darstellung des Bereichs Z in Fig. 1A.
Fig. 2 ist eine schematische Perspektivansicht einer Ausstechvorrichtung gemäß einer Ausführungsform der vorliegenden Erfindung.
Fig. 3 ist eine schematische Darstellung eines radialen Querschnitts durch eine Ausstechvorrichtung gemäß einer Ausführungsform der vorliegenden Erfindung.
Fig. 4 ist eine schematische Ansicht einer Trägerfläche einer abgerollten zweiten Ausstechvorrichtung gemäß einer Ausführungsform der vorliegenden Erfindung.
Fig. 5 ist eine schematische Querschnittsansicht eines Systems gemäß einer Ausführungsform der vorliegenden Erfindung.

### Ausführliche Beschreibung der offenbarten Ausführungsformen

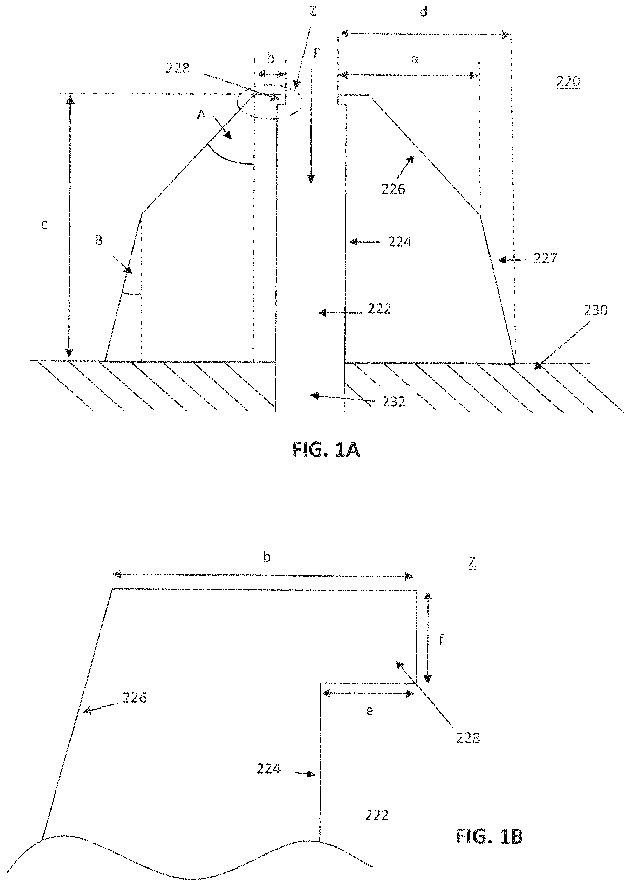

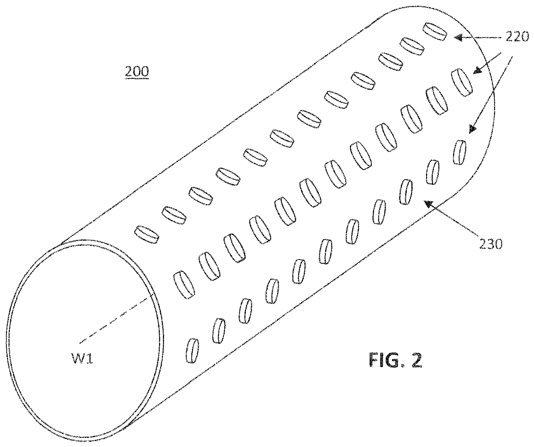

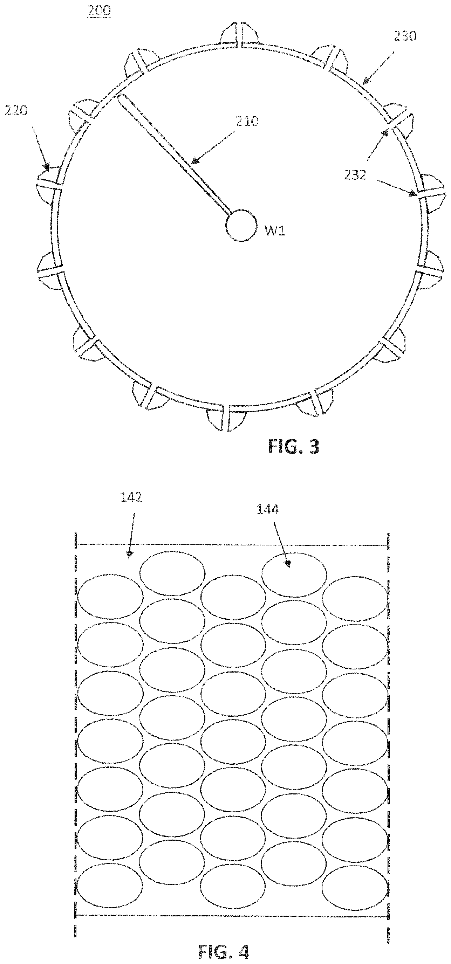

Fig. 1A ist eine schematische Darstellung eines senkrechten Querschnitts durch eine Ausstechwand 220 einer Ausstechvorrichtung 200 gemäß einer Ausführungsform der vorliegenden Erfindung und Fig. 1B ist eine vergrößerte schematische Darstellung des Bereichs Z in Fig. 1A. Fig. 2 ist eine schematische Perspektivansicht einer Ausstechvorrichtung 200 gemäß einer Ausführungsform der vorliegenden Erfindung. Fig. 3 ist eine schematische Darstellung eines radialen Querschnitts durch eine Ausstechvorrichtung 200 gemäß einer Ausführungsform der vorliegenden Erfindung.

Mit Bezug auf Fig. 1A, 1B, 2 und 3 offenbart die vorliegende Erfindung in einer Ausführungsform eine Ausstechvorrichtung 200 mit einer Vielzahl von geschlossenen Ausstechwänden 220. Die Ausstechvorrichtung 200 der gezeigten Ausführungsformen dient in erster Linie der Fertigung von Stapelchips. Die Ausstechvorrichtung 200 umfasst eine Walze mit der äußeren zylindrischen Trägerfläche 230 und die Vielzahl von geschlossenen Ausstechwänden 220. Die Walze weist im Bereich der Trägerfläche 230 eine Vielzahl von Öffnungen 232 auf.

Wie in Fig. 2 gezeigt, können die Ausstechwände 220 in Reihenform auf einer Trägerfläche 230 der Ausstechvorrichtung 200 angeordnet sein. Die vorliegende Erfindung ist jedoch nicht auf eine bestimmte Anordnung der Ausstechwände 220 beschränkt und andere Anordnungsmuster, z.B. gitterförmig oder seitlich versetzt, sind ebenso denkbar.

Jede der Vielzahl von geschlossenen Ausstechwänden 220 erstreckt sich jeweils von der Trägerfläche von der Walze weg nach außen, wobei jede Ausstechwand 220 jeweils einen Innenbereich 222 umgibt, der mit mindestens einer der Öffnung 232 in der Trägerfläche 230 kommuniziert. In Fig. 1A sind Innenbereich 222 und Öffnung 232 so dargestellt, dass sie aneinander ausgerichtet sind und ein ähnliches Öffnungsverhältnis aufweisen. Jedoch ist die vorliegende Erfindung nicht darauf beschränkt. So könnte auch ein dünnerer Kanal einen oder mehrere Innenbereiche unterschiedlicher Ausstechwände verbinden (nicht gezeigt) oder jedem Innenbereich der Ausstechwände mehrere Öffnungen in der Trägerfläche zugeordnet sein (nicht gezeigt). Um einen besseren Teigfluss zu gewährleisten, ist eine 1:1 Zuordnung von Innenbereichen 222 der Ausstechwände 220 zu je einer Öffnung 232 bevorzugt. Weiterhin ist bevorzugt, dass die Innenbereiche und die Öffnungen ein ähnliches Öffnungsverhältnis (d.h. Fläche des Öffnungsquerschnitts) aufweisen, um einen gleichmäßigen Teigfluss zu ermöglichen. In einer Ausführungsform der Erfindung weist die Öffnung ein geringeres, bevorzugt um 10%-50% geringeres, Öffnungsverhältnis auf, um ein Zurückfließen des Teigs aus dem Inneren der Walze zu unterbinden (nicht gezeigt). Bevorzugt weist die Öffnung 232 jedoch ein Öffnungsverhältnis bzw. einen Durchmesser auf, der dem des Querschnitts des Innenbereichs entspricht (siehe Fig. 1A).

Mit Bezug auf Fig. 1A und 1B umfasst ein senkrechter Querschnitt jeder der Ausstechwände 220 eine Ausstechwandinnenseite 224, die dem durch die Ausstechwand 220 umgebenen Innenbereich 222 zugewandt ist und sich im Wesentlichen radial zur Zylinderachse der Walze bzw. der Walzenachse W1 (Fig. 2 und 3) nach Außen erstreckt. In Fig. 1A ist die Trägerfläche 230 der Übersichtlichkeit halber als eben bzw. als "ausgerollt" dargestellt auch wenn die Trägerfläche 230 eigentlich der Mantelfläche eines Zylinders entspricht.

Ein senkrechter Querschnitt jeder der Ausstechwände 220 umfasst zudem eine Ausstechwandaußenseite 226, die dem durch die Ausstechwand 220 umgebenen Innenbereich 222 abgewandt ist und bezüglich der Ausstechwandinnenseite 224 so geneigt ist, dass die Ausstechwandinnenseite 224 und die Ausstechwandaußenseite 226 bezüglich der Walzenachse W1 außenliegend zusammentreffen, um einen Ausstechrand zu bilden. Wie in Fig. 1A und 1B gezeigt ist, ist der Bereich, in dem die Ausstechwandinnenseite 224 und die Ausstechwandaußenseite 226 zusammentreffen bevorzugt abgeflacht, um ein Abbrechen oder Umbiegen des Ausstechrands und ein Anhaften des Teigs zu vermeiden. Die Ausstechwandinnenseite 224 und die Ausstechwandaußenseite 226 schließen einen Winkel A von 30° bis 65°, bevorzugt 40° bis 60°, besonders bevorzugt 45° bis 55°ein.

Im Bereich des Ausstechrands ist zudem ein Vorsprung 228 vorgesehen, der in Fig. 1B vergrößert dargestellt ist. Der Vorsprung 228 erstreckt sich von dem Ausstechrand der Ausstechwand 220 im Wesentlichen senkrecht zur Ausstechwandinnenseite 224 in Richtung des umschlossenen Innenbereichs 222. Das heißt, der Vorsprung 228 ist im Bereich der jeweiligen Ausstechwand 222 näherungsweise parallel zur Trägerfläche 230.

Gemäß der vorliegenden Ausführungsform kann der senkrechte Querschnitt jeder der Ausstechwände 220 weiterhin eine Ausstechwandhalterungsseite 227 aufweisen, die sich zwischen der Ausstechwandaußenseite 226 und der Trägerfläche 230 der Walze erstreckt, wobei ein Winkel B zwischen der Ausstechwandhalterungsseite 227 und Ausstechwandinnenseite 224 zwischen 5° und 20°, bevorzugt zwischen 7° und 15° beträgt. Jedoch sollte die Erfindung nicht darauf beschränkt werden. In einigen Ausführungsformen kann die Ausstechwandhalterungsseite 227 auch parallel zur Ausstechwandinnenseite 224 verlaufen.

Im Folgenden sind bevorzugte Abmessungen des senkrechten Querschnitts einer geschlossenen Ausstechwand gemäß einer Ausführungsform der Erfindung beschrieben. Jedoch sollte die Erfindung nicht auf diese Abmessungen beschränkt werden. Gemäß dieser Ausführungsform erstreckt sich die Ausstechwand 220 1,5mm - 4mm, bevorzugt 2,5mm - 3,5mm von der Trägerfläche 230 weg (Abmessung c). Das heißt, diese Strecke liegt zwischen Trägerfläche 230 der Walze und dem äußersten Ausstechrand. Die Breite der Ausstechwand in dem Bereich, in dem die Ausstechwandhalterungsseite 227 (wie in Fig. 1A gezeigt) auf die Trägerfläche 230 trifft (Abmessung d) beträgt etwa 1,5mm - 3mm, bevorzugt 1,8mm - 2,5mm. Die Breite der Ausstechwand in dem Bereich, in dem die Ausstechwandaußenseite 226 auf die Ausstechwandhalterungsseite 227 trifft (Abmessung a) beträgt etwa 1,0mm - 2,5mm, bevorzugt 1,3mm - 2,0mm. Die Breite des Ausstechrands inklusive dem Vorsprung 228 (Abmessung b) beträgt etwa 0,2mm - 0,8mm, bevorzugt 0,4mm - 0,6mm. Entsprechend beträgt Breite des Ausstechrands ohne den Vorsprung 228 etwa 0,1mm - 0,7mm, bevorzugt 0,3mm - 0,5mm.

Mit Bezug auf Fig. 1B beträgt die Höhe des Vorsprungs (Abmessung f) etwa 0,05mm - 0,2mm, bevorzugt 0,08mm - 0,15mm und die Breite des Vorsprungs (Abmessung e) ebenfalls etwa 0,05mm - 0,2mm, bevorzugt 0,08mm - 0,15mm.

Die Ausstechwand ist der Stabilität wegen bevorzugt massiv, kann in einigen Ausführungsformen auch Hohlräume aufweisen. Der Vorsprung 228 ist bevorzugt einstückig mit der Ausstechwand 220 ausgebildet und besteht im Wesentlichen aus dem gleichen Material wie die Ausstechwand 220. Bevorzugte Materialien für die Ausstechwand sind Metall, wie z.B. Aluminium, Edelstahl, Kupfer oder deren Legierungen, oder geeignete Kunststoffe. Die Ausstechwand 220 kann mit einer Antihaft-Beschichtung, z.B. Keramik, Emaille oder Polytetrafluorethylen (PTFE), beschichtet sein. Diese Antihaft-Beschichtung kann im Bereich des Vorsprungs 228 weggelassen werden, um die Reibung in diesem Bereich zu erhöhen, um einen Rückfluss des Teigs aus dem Innenbereich 222 zu verhindern. Der senkrechte Querschnitt des Vorsprungs 228 ist in Fig. 1A und Fig. 1B als rechteckig dargestellt. Jedoch sollte die Erfindung nicht darauf beschränkt werden und andere Querschnitte, wie dreieckig, gewellt oder abgerundet, sind ebenfalls anwendbar.

In einer besonderen Ausführungsform umfasst die Walze innenliegend ein Schneckengewinde 210, wie es in Fig. 3 angedeutet ist. Das Schneckengewinde 210 ist bezüglich der Walze rotierbar gelagert, so dass die Schnecke 210 durch die relative Rotation Teig aus dem inneren der Walze seitlich aus der Walze abführen kann.

Fig. 4 ist eine schematische Ansicht eines Ausschnitts einer Trägerfläche 142 einer abgerollten zweiten Ausstechvorrichtung 140 gemäß einer Ausführungsform der vorliegenden Erfindung. Die Trägerfläche 142 ist der Übersichtlichkeit halber nur ausschnittsweise gezeigt. Die Trägerfläche 142 der zweiten Ausstechvorrichtung 140 ist ähnlich der Trägerfläche 230 der (ersten) Ausstechvorrichtung 200 der obigen Beschreibung zylinder- bzw. walzenförmig und angepasst, um mit einer Teigbahn auf einem Laufband einzugreifen. Die Trägerfläche 142 weist eine Vielzahl von Stapelchipausstechformen 144 auf. Die Stapelchipausstechformen 144 dienen dazu den endgültigen Umriss des Stapelchiprohlings aus der Teigbahn auszustechen. Bevorzugt wird nach dem Ausstechen das Teignetz, das noch um die Stapelchipsrohlinge herum auf dem Laufband liegt, aufgenommen und abgezogen, so dass nur noch die Stapelchipsrohlinge auf dem Laufband verbleiben. Die Umrisse der Stapelchips sind in der vorliegenden Erfindung nicht begrenzt. Mögliche Umrisse der erfindungsgemäßen Snackprodukte bzw. der entsprechenden Teigrohlinge sind rund, oval oder polygonal wie z.B. quadratisch, rechteckig, dreieckig, fünfeckig, sechseckig, trapezförmig oder parallelogrammförmig.

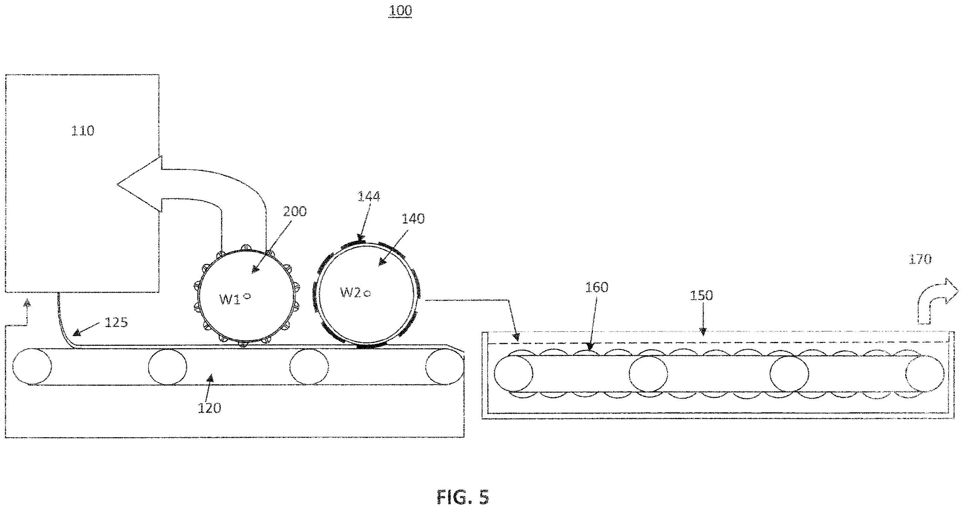

Fig. 5 ist eine schematische Querschnittsansicht eines Systems 100 gemäß einer Ausführungsform der vorliegenden Erfindung. Anhand des dargestellten Systems 100 lässt sich auch das Herstellungsverfahren der vorliegenden Erfindung am besten begreifen.

Das System 100 dient der Herstellung von Stapelchips. Das System 100 der vorliegenden Ausführungsform umfasst eine Teigbahnproduktionsvorrichtung 110. Diese kann wie im Stand der Technik üblich ausgebildet sein. Bevorzugt umfasst Vorrichtung 110 einen Vorratsbehälter für eine Teigmasse (z.B. Kartoffelmasse), die über einen mit mindestens einer, besonders bevorzugt zwei oder mehreren Walzen versehenen Ausgang in Form einer Teigbahn 125 austritt. Andere geeignete Vorrichtungen zur Bereitstellung der Teigbahn 125 sind ebenso implementierbar. Das System 100 der vorliegenden Ausführungsform umfasst außerdem ein Laufband 120, das zur Aufnahme der Teigbahn 125 geeignet ist. Bevorzugt gleitet die Teigbahn 125 von Vorrichtung 110 direkt auf das Laufband 120, um von diesem weitertransportiert zu werden.

Das Laufband 120 transportiert die Teigbahn 125 zu einer ersten Ausstechvorrichtung 200. Diese entspricht bevorzugt der oben mit Bezug auf Fig. 1A, 1B, 2 und 3 beschriebenen Ausstechvorrichtung 200. In einer Ausführungsform wird Teig, der durch die Ausstechvorrichtung 200 aus der Teigbahn 125 ausgestochen wird, durch die Öffnungen 232 in der Trägerfläche 230 ins Innere der Ausstechvorrichtung 200 transportiert, wo die Schnecke 210 den Teig seitlich aus der Walze der Ausstechvorrichtung 200 abführt, von wo aus der Teig in die Vorrichtung 110 bzw. in den Teigmischer zurückgeführt wird.

Die Walze der Ausstechvorrichtung 200 ist rotierbar um die Walzenachse W1 und derart gelagert, dass der radial außen liegende Ausstechrand der Ausstechvorrichtung 200 mit dem Laufband 120 eingreift. Die Ausstechvorrichtung 200 sticht im Wesentlichen Öffnungen in der Teigbahn 125 aus, die einen Durchmesser von etwa 2mm - 10mm, bevorzugt 3mm - 8mm bzw. eine Querschnittsfläche von etwa 3mm² - 80mm², bevorzugt 10mm² - 60mm² aufweisen.

Die so mit Öffnungen versehene Teigbahn 125 wird durch das Laufband 120 weiter zu einer zweiten Ausstechvorrichtung 140 mit einer zweiten Walze transportiert. Die zweite Ausstechvorrichtung 140 entspricht bevorzugt der oben mit Bezug auf Fig. 4 beschriebenen zweiten Ausstechvorrichtung 140. In dieser Ausführungsform ist die Walze der zweiten Ausstechvorrichtung 140 bezüglich der Laufrichtung des Laufbands 120 nach der ersten Ausstechvorrichtung 200 angeordnet, und angepasst, um einen Umriss eines Stapelchiprohlings mit den Ausstechformen 144 auszustechen. Es ist jedoch ebenso möglich die zweite Walze vor der ersten Walze 200 anzuordnen. Die ausgestochenen Stapelchipteiglinge werden nach den zwei Ausstechvorgängen durch die erste und die zweite Ausstechvorrichtung (200, 140) von dem verblieben Teig der Teigbahn getrennt.

Besonders bevorzugt wird das entstandene Teignetz über ein Steigband (nicht gezeigt) abgeführt und die ausgestochenen Teiglinge bleiben auf dem Transportband liegen und werden zur Fritteuse transportiert. In einer bevorzugten Ausführungsform besitzt die zweite Walze keine Öffnungen, in die Teigreste transportiert werden, und somit auch kein innenliegendes Schneckengewinde.

In einer anderen Ausführungsform geschieht dies direkt mit dem letzteren der zwei Ausstechvorgänge. Z.B. kann der Teil der Teigbahn 120, der die Ausstechformen 144 umgibt, durch ein Vakuum an die zweiten Ausstechvorrichtung angesaugt werden und später während der Rotation geeignet von der Walze entfernt werden (abgestoßen, abgekratzt etc.). In einer Ausführungsform wird der so angesaugte Teig über das Innere der zweiten Ausstechvorrichtung 140 abgeführt auf ähnliche Art und Weise, wie es im Zusammenhang mit Ausstechvorrichtung 200 beschrieben wurde, also über Öffnungen in der Trägerfläche 142 und ein in der Walze der zweiten Ausstechvorrichtung 140 vorgesehenes Schneckengewinde. Die so von den Teiglingen getrennten Teigreste werden ebenfalls an Vorrichtung 110 zurückgeführt.

Das System 100 zum Bilden von Stapelchips umfasst in einer Ausführungsform weiterhin eine bewegliche Garhalterung 160, die eine Vielzahl zylindrisch gewölbter Flächen mit jeweils mehreren Löchern aufweist und die angepasst ist, um die durch die erste und zweite Ausstechvorrichtung 200, 140 ausgestochenen Teiglinge mit Umriss eines Stapelchiprohlings kontinuierlich auf der zylindrisch gewölbten Fläche aufzunehmen. Besonders bevorzugt werden die Teiglinge mittels des Transportbandes zur Fritteuse gebracht und laufen über ein Fritteuseneinlaufband (nicht gezeigt) in die Fritteuse, wo sie jeweils von den Garhalterungen aufgenommen werden. Alternativ nimmt die bewegliche Garhalterung 160 die Teiglinge in einer Ausführungsform direkt von der letzten Ausstechvorrichtung 140 oder 200 ab.

Das System umfasst in dieser Ausführungsform eine Backvorrichtung, bevorzugt eine Fritteuse 150, wobei die Garhalterung 160 angepasst ist, um in die Fritteuse 150 einzutauchen, so dass die ausgestochenen Teiglinge auf der Garhalterung 160 in dem Fett der Fritteuse 150 gebacken werden. Nach dem Backen werden die Stapelchips gewürzt, z.B. mit einer Würzslurry oder Trockenwürze, und verpackt.

Die vorliegende Erfindung betrifft zudem die Verwendung einer Ausstechvorrichtung 200 gemäß der obigen Beschreibung in einem Verfahren, wie es oben im Zusammenhang mit dem System beschrieben wurde bzw. im Folgenden beschrieben wird.

Das Verfahren in einer Ausführungsform der vorliegenden Erfindung dient dem Bilden von Stapelchips und umfasst das Bereitstellen einer Teigbahn auf einem Laufband, das Transportieren der Teigbahn mittels des Laufbands, das Ausstechen von Teigöffnungen in der Teigbahn mittels einer ersten Ausstechvorrichtung, das Ausstechen von Teiglingen mittels einer zweiten Ausstechvorrichtung, wodurch Teiglinge mit Umriss eines Stapelchiprohlings gebildet werden, wobei jeder Teigling mindestens eine durch die erste Ausstechvorrichtung ausgestochene Teigöffnungen aufweist und das Backen der Teiglinge. Die erste Ausstechvorrichtung entspricht dabei bevorzugt der ersten Ausstechvorrichtung 200 der obigen Beschreibung.

Durch das Verfahren zum Bilden von Stapelchips gemäß der vorliegenden Offenbarung (das die Ausstechvorrichtung 200 verwendet) werden die Teigöffnungen durch die Ausstechwand ausgestochen und der ausgestochene Teig wird durch die Öffnungen in der Trägerfläche ins Innere der Walze transportiert, so dass der Vorsprung der Ausstechwand den ausgestochenen Teig in dem Innenbereich hält und so verhindert, dass der Teig wieder aus dem Innenbereich hinaus fließt.

Das Verfahren zum Bilden von Stapelchips umfasst in einer bevorzugten Ausführungsform weiterhin das Transportieren des durch die erste Ausstechvorrichtung ausgestochenen Teigs mittels eines innenliegenden Schneckengewindes und das Rückführen des ausgestochenen Teigs, so dass dieser in dem Schritt des Bereitstellens einer Teigbahn verwendet wird.

Das Verfahren in einer Ausführungsform der vorliegenden Erfindung kann wie folgt zusammengefasst werden:
- Mischen des Stapelchipsteiges
- Ausrollen des Teigbandes
- 2-stufiges-Ausstechsystem:
   o Ausstechen der Innenteile z.B. Augen und Mund, die in den Walzenkern wandern, mittels einer Schnecke ausgetragen und dem Prozess vermahlen wieder zugeführt werden
   o Ausstechen der Außenform z.B. Oval, Rund, Polygonal etc.
   o Vermahlen und Zurückführen des entstandenen Teignetzes
- Transportieren der Teiglinge zur Fritteuse
- Frittieren mit Führungsformen
- Würzen (z.B. Slurrywürzung oder Trockenwürzung)
- Verpacken

Jedoch sollte verstanden werden, dass nicht alle Schritte unbedingt notwendig sind, um die vorliegenden Erfindung zu reflektieren und ebenso, dass einige Schritte vertauscht werden können.

### Beispiele

Im Folgenden werden praktikable Beispiele für Teigmischungen bereitgestellt, wie sie in der vorliegenden Erfindung verwendet werden können.

### Basis Kartoffel:

1) 40-50 Gew.-%, bevorzugt 45 Gew.-% Kartoffelpulver; und
   15-25 Gew.-%, bevorzugt 20% Gew.-% (Kartoffel-)Stärke, vorgelatiniert.
   Auf 100% fehlend: Wasser, Gewürze und übliche Teigzusätze.
   oder
2) 35-45 Gew.-%, bevorzugt 40 Gew.-% Kartoffelpulver
   ca. 3-7 Gew.-%, bevorzugt 5 Gew.-% (Kartoffel-)Stärke, vorgelatiniert
   ca. 15-25 Gew.-%, bevorzugt 20 Gew.-% (Kartoffel-)Stärke, nativ.
   Auf 100% fehlend: Wasser, Gewürze und übliche Teigzusätze.

Es sei nochmals angemerkt, dass die Stärken nicht zwingend auf Kartoffel basieren müssen. Andere Ausgangsprodukte wie Mais, Reis oder Weizen sind ebenfalls denkbar, um Teile der obigen Zutaten oder ganze Zutatenrubriken zu ersetzen.

### Basis Mais:

3) ca. 35-45 Gew.-%, bevorzugt 40 Gew.-% Masamehl
ca. 10% Stärke nativ
ca. 10% Maismehl, vorgelatiniert.
Auf 100% fehlend: Wasser, Gewürze und übliche Teigzusätze.

Die Teigfeuchte der obigen Mischungen kann zwischen 37 - 42 Gew.-% liegen.

## Patentansprüche

1. Verfahren zum Herstellen von Stapelchips mit ausgestochenen Inneneilen aus getrockneten und/oder teilweise vorgelatinierten Rohstoffen, ausgewählt aus der Gruppe, bestehend aus Kartoffel-, Mais-, Reis-, Süßkartoffel- und Weizenpulver, wobei die Rohstoffe in Form eines Pulvers, Mehls, einer Stärke oder als Mus vorliegen, umfassend:
Bereitstellen einer Teigbahn auf einem Laufband (120);
Transportieren der Teigbahn mittels des Laufbands (120);
ein zweistufiges Ausstechverfahren, umfassend:
Ausstechen von Teigöffnungen in der Teigbahn mittels einer ersten Ausstechvorrichtung (200);
Ausstechen von Teiglingen mittels einer zweiten Ausstechvorrichtung (140), wodurch Teiglinge mit Umriss eines Stapelchiprohlings gebildet werden, wobei jeder Teigling mindestens eine durch die erste Ausstechvorrichtung (200) ausgestochene Teigöffnungen aufweist; und
Frittieren der Teiglinge.

2. Verfahren gemäß Anspruch 1, wobei die erste Ausstechvorrichtung (200) umfasst:
eine Walze mit einer äußeren zylindrischen Trägerfläche (230), wobei die Walze im Bereich der Trägerfläche (230) eine Vielzahl von Öffnungen (232) aufweist; und
eine Vielzahl von geschlossenen Ausstechwänden (220), die sich von der Trägerfläche (230) von der Walze weg nach außen erstrecken, wobei jede Ausstechwand (220) jeweils einen Innenbereich (222) umgibt, der mit mindestens einer der Öffnung (232) in der Trägerfläche (230) kommuniziert und wobei ein senkrechter Querschnitt jeder der Ausstechwände (220) umfasst:
eine Ausstechwandinnenseite (224), die dem durch die Ausstechwand (220) umgebenen Innenbereich (222) zugewandt ist und sich im Wesentlichen radial zur Walzenachse (W1) nach Außen erstreckt;
eine Ausstechwandaußenseite (226), die dem durch die Ausstechwand (220) umgebenen Innenbereich (222) abgewandt ist und bezüglich der Ausstechwandinnenseite (224) so geneigt ist, dass die Ausstechwandinnenseite (224) und die Ausstechwandaußenseite (226) bezüglich der Walzenachse (W1) außenliegend zusammentreffen, um einen Ausstechrand zu bilden, wobei die Ausstechwandinnenseite (224) und die Ausstechwandaußenseite (226) einen Winkel (A) von 30° bis 65° einschließen; und
einen Vorsprung (228), der sich von dem Ausstechrand der Ausstechwand (220) im Wesentlichen senkrecht zur Ausstechwandinnenseite (224) in Richtung des umschlossenen Innenbereichs (222) erstreckt.

3. Verfahren gemäß Anspruch 2, wobei die Teigöffnungen durch die Ausstechwand (220) ausgestochen werden, der ausgestochene Teig durch die Öffnungen (232) in der Trägerfläche (230) ins Innere der Walze transportiert wird, und wobei der Vorsprung (228) der Ausstechwand (220) den ausgestochenen Teig in dem Innenbereich (222) hält und so verhindert, dass der Teig wieder aus dem Innenbereich (222) hinausfließt.

4. Verfahren gemäß Anspruch einem der vorstehenden Ansprüche, weiterhin umfassend:
Transportieren des durch die erste Ausstechvorrichtung (200) ausgestochenen Teigs mittels eines innenliegenden Schneckengewindes (210); und
Rückführen des ausgestochenen Teigs, so dass dieser in dem Schritt des Bereitstellens einer Teigbahn verwendet wird.

5. Verfahren gemäß Anspruch einem der vorstehenden Ansprüche, wobei der Schritt des Bereitstellens einer Teigbahn auf einem Laufband (120) umfasst:
Mischen des Rohstoffs mit Wasser, um eine Teigmasse zu erhalten;
Auswalzen der Teigmasse; und
Ablegen der ausgewalzten Teigmasse, um die Teigbahn auf dem Laufband (120) zu bilden.

6. System zur Herstellung von Stapelchips mit ausgestochenen Inneneilen, umfassend:
ein Laufband (120), das zur Aufnahme einer Teigbahn geeignet ist;
eine erste Ausstechvorrichtung (200), umfassend:
eine Walze mit einer äußeren zylindrischen Trägerfläche (230), wobei die Walze im Bereich der Trägerfläche (232) eine Vielzahl von Öffnungen (232) aufweist; und
eine Vielzahl von geschlossenen Ausstechwänden (220), die sich von der Trägerfläche (230) von der Walze weg nach außen erstrecken, wobei jede Ausstechwand (220) jeweils einen Innenbereich (222) umgibt, der mit mindestens einer der Öffnung (232) in der Trägerfläche (230) kommuniziert und wobei ein senkrechter Querschnitt jeder der Ausstechwände (220) umfasst:
eine Ausstechwandinnenseite (224), die dem durch die Ausstechwand (220) umgebenen Innenbereich (222) zugewandt ist und sich im Wesentlichen radial zur Walzenachse nach Außen erstreckt;
eine Ausstechwandaußenseite (226), die dem durch die Ausstechwand (220) umgebenen Innenbereich (222) abgewandt ist und bezüglich der Ausstechwandinnenseite (224) so geneigt ist, dass die Ausstechwandinnenseite (224) und die Ausstechwandaußenseite (226) bezüglich der Walzenachse (W1) außenliegend zusammentreffen, um einen Ausstechrand zu bilden, wobei die Ausstechwandinnenseite (224) und die Ausstechwandaußenseite (226) einen Winkel (A) von 30" bis 65° einschließen; und
einen Vorsprung (228), der sich von dem Ausstechrand der Ausstechwand (220) im Wesentlichen senkrecht zur Ausstechwandinnenseite (224) in Richtung des umschlossenen Innenbereichs (222) erstreckt,
wobei die Walze rotierbar und derart gelagert ist, dass der radial außen liegende Ausstechbereich der ersten Ausstechvorrichtung (200) mit dem Laufband (120) eingreift;
eine zweite Ausstechvorrichtung (140) mit einer zweiten Walze, die bezüglich der Laufrichtung des Laufbands (120) nach der ersten Walze angeordnet ist, und die angepasst ist, um einen Umriss eines Stapelchiprohlings auszustechen;
eine bewegliche Garhalterung (160), die eine Vielzahl zylindrisch gewölbter Flächen mit jeweils mehreren Löchern aufweist und die angepasst ist, um die durch die erste Ausstechvorrichtung (200) und die zweite Ausstechvorrichtung (140) ausgestochenen Teiglinge mit Umriss eines Stapelchiprohlings kontinuierlich auf der zylindrisch gewölbten Fläche aufzunehmen; und
eine Fritteuse (150), wobei die Garhalterung (160) angepasst ist, um in die Fritteuse (150) einzutauchen, so dass die ausgestochenen Teiglinge auf der Garhalterung (160) frittiert werden.

7. System gemäß Anspruch 6, wobei der senkrechte Querschnitt jeder der Ausstechwände (220) weiterhin umfasst:
eine Ausstechwandhalterungsseite (227), die sich zwischen der Ausstechwandaußenseite (226) und der Trägerfläche (230) der Walze erstreckt, wobei ein Winkel (B) zwischen der Ausstechwandhalterungsseite (227) und Ausstechwandinnenseite (224) zwischen 5° und 20° beträgt.

8. System gemäß einem der Ansprüche 6-7, wobei die Ausstechwandinnenseite (224) eine Antihaftbeschichtung umfasst.

9. System gemäß einem der Ansprüche 6-8, wobei die Walze innenliegend ein Schneckengewinde (210) umfasst, das bezüglich der Walze rotierbar gelagert ist.

10. System gemäß einem der Ansprüche 6 bis 9, weiterhin umfassend:
eine Teigbahnproduktionsvorrichtung (110), die angepasst ist zum Mischen eines stärkehaltigen Pulvers, um eine Teigmasse zu erhalten, Auswalzen der Teigmasse und Ablegen der ausgewalzten Teigmasse, um die Teigbahn auf dem Laufband (120) zu bilden.

11. Verwendung eines Systems gemäß einem der Ansprüche 6-10 in einem Verfahren gemäß einem der Ansprüche 1-5.

## Claims

1. Method for producing stacked chips having cutout inner parts from dried and/or partially pregelatinized raw materials selected from the group consisting of potato powder, corn powder, rice powder, sweet potato powder and wheat powder, said raw materials being in the form of a powder, flour, starch or puree, comprising:
providing a dough sheet on a conveyer belt (120);
transporting the dough sheet by means of the conveyer belt (120);
a two-step cutout method, comprising:
cutting out dough openings in the dough sheet by means of a first cutting out device (200);
cutting out dough pieces by means of a second cutting out device (140), whereby dough pieces are formed with outline of a stack chip blank, wherein each dough piece has at least one dough opening cut out by the first cutting out device (200); and
frying the dough pieces.

2. Method according to claim 1, wherein the first cutting out device comprises (200):
a roller having an outer cylindrical support surface (230), the roller having a plurality of openings (232) in the region of the support surface (230); and
a plurality of closed cutout walls (220) extending outwardly from the support surface (230) away from the roller, each cutout wall (220) each surrounding an interior region (222) communicating with at least one of the opening (232) in the support surface (230), and wherein a vertical cross-section of each of the cutout walls (220) comprises:
a cutout wall inner side (224) which faces the interior region (222) surrounded by the cutout wall (220) and extends outwards substantially radially with respect to the roller axis (Wl);
a cutout wall outer side (226) which faces away from the interior region (222) surrounded by the cutout wall (220) and is inclined with respect to the cutout wall inner side (224), such that the cutout wall inner side (224) and the cutout wall outer side (226) meet externally with respect to the roller axis (W1) in order to form a cutout edge, the cutout wall inner side (224) and the cutout wall outer side (226) enclosing an angle (A) of 30° to 65°; and
a projection (228) extending from the cutout edge of the cutout wall (220) substantially perpendicular to the cutout wall inner side (224) toward the enclosed interior region (222).

3. Method according to claim 2, wherein the dough openings are cut out through the cutout wall (220), the cutout dough is transported through the openings (232) in the support surface (230) into the interior of the roller, and wherein the projection (228) of the cutout wall (220) holds the cutout dough in the interior region (222) and thus prevents the dough from flowing out of the interior region (222) again.

4. Method according to claim anyone of the preceding claims, further comprising:
transporting the dough cut out by the first cutting out device (200) by means of an internal worm thread (210); and
returning the cut out dough so that it is used in the step of providing a dough sheet.

5. Method according to claim anyone of the preceding claims, wherein the step of providing a dough sheet on a conveyer belt (120) comprises:
mixing the raw material with water to obtain a dough mass;
rolling out the dough; and
placing the rolled out dough mass on the conveyor belt (120) to form the dough sheet.

6. System for making stacked chips having cutout inner parts, comprising:
a conveyer belt (120) for receiving a dough sheet;
a first cutting out device (200), comprising:
a roller having an outer cylindrical support surface (230), the roller having a plurality of openings (232) in the region of the support surface (232); and
a plurality of closed cutout walls (220) extending outwardly from the support surface (230) away from the roller, each cutout wall (220) respectively surrounding an interior region (222) communicating with at least one of the openings (232) in the support surface (230), and wherein a vertical cross-section of each of the cutout walls (220) comprises:
a cutout wall inner side (224) which faces the interior region (222) surrounded by the cutout wall (220) and extends outwards substantially radially with respect to the roller axis;
a cutout wall outer side (226) which faces away from the interior region (222) surrounded by the cutout wall (220) and is inclined with respect to the cutout wall inner side (224), such that the cutout wall inner side (224) and the cutout wall outer side (226) meet externally with respect to the roller axis (W1) in order to form a cutout edge, the cutout wall inner side (224) and the cutout wall outer side (226) of enclosing an angle (A) of 30° to 65°; and
a projection (228) extending from the cutout edge of the cutout wall (220) substantially perpendicular to the cutout wall inner side (224) toward the enclosed interior region (222),
the roller being rotatable and mounted in such a way that the radially outer cutout region of the first cutting out device (200) engages with the conveyer belt (120);
a second cutting out device (140) having a second roller disposed downstream of the first roller with respect to the running direction of the conveyer belt (120) and adapted to cut out an outline of a stacked chip blank;
a movable cooking holder (160) having a plurality of cylindrically curved surfaces each having a plurality of holes and adapted to receive continuously on said cylindrically curved surface dough pieces cut out by said first cutting out device (200) and said second cutting out device (140) with outline of a stacked chip blank; and
a fryer (150), the cooking holder (160) being adapted to immerse into the fryer (150) so that the cutout dough pieces are fried on the cooking holder (160).

7. System according to claim 6, wherein the vertical cross section of each of the cutout walls (220) further comprises:
a cutout wall support side (227) extending between the cutout wall outer side (226) and the support surface (230) of the roller, wherein an angle (B) between the cutout wall support side (227) and the cutout wall inner side (224) is between 5° and 20°.

8. System according to anyone of claims 6 to 7, wherein the cutout wall inner side (224) comprises a non-stick coating.

9. System according to anyone of claims 6 to 8, wherein the roller internally comprises a worm thread (210) rotatably supported with respect to the roller.

10. System according to anyone of claims 6 to 9, further comprising:
a dough sheet production apparatus (110) adapted for mixing a starch-containing powder to obtain a dough mass, rolling out the dough mass and placing the rolled out dough mass to form the dough sheet on the conveyor belt (120).

11. Use of a system in accordance with anyone of claims 6-10 in a method according to anyone of claims 1-5.

## Revendications

1. Procédé, destiné à fabriquer des chips empilables pourvues de parties internes découpées à partir de matières premières séchées et/ou partiellement pré-gélatinisées, sélectionnées dans le groupe comprenant la poudre de pomme de terre, la poudre de maïs, la poudre de riz, la poudre de patate douce et la poudre de blé, les matières premières se présentant sous la forme d'une poudre, d'une farine, d'un amidon ou d'une compote, comprenant :
la mise à disposition d'une bande de pâte sur un tapis roulant (120) ;
le transport de la bande de pâte au moyen du tapis roulant (120) ;
un procédé de découpage en deux étapes, comprenant :
le découpage d'orifices de pâte dans la bande de pâte, au moyen d'un premier dispositif de découpage (200) ;
le découpage de pâtons au moyen d'un deuxième dispositif de découpage (140), pour créer des pâtons ayant le contour d'une ébauche d'une chips empilable, chaque pâton comportant au moins un orifice de pâte découpé par le premier dispositif de découpage (200) ; et
la friture des pâtons.

2. Procédé selon la revendication 1, le premier dispositif de découpage (200) comportant :
un cylindre pourvu d'une surface porteuse (230) extérieure cylindrique, le cylindre comportant une pluralité d'orifices (232) dans la zone de la surface porteuse (230);
une pluralité de parois de découpage (220) closes, qui à partir de la surface porteuse (230) s'étendent vers l'extérieur, en s'éloignant du cylindre, chaque paroi de découpage (220) entourant respectivement une zone intérieure (222) qui communique avec au moins l'un des orifices (232) dans la surface porteuse (230) et une section transversale verticale englobant chacune des parois de découpage (220) ;
une face intérieure (224) de paroi de découpage qui fait face à la zone intérieure (222) entourée par la paroi de découpage (220) et qui s'étend sensiblement vers l'extérieur, en direction radiale par rapport à l'axe du cylindre (W1) ;
une face extérieure (226) de paroi de découpage qui est opposée à la zone intérieure (222) entourée par la paroi de découpage (220) et qui par rapport à la face intérieure (224) de paroi de découpage est inclinée de telle sorte que la face intérieure (224) de paroi de découpage et la face extérieure (226) de paroi de découpage coïncident en externe, par rapport à l'axe du cylindre (W1), pour former un bord de découpage, la face intérieure (224) de paroi de découpage et la face extérieure (226) de paroi de découpage incluant un angle (A) de 30° à 65°,
une saillie (228) qui s'étend du bord de découpage de la paroi de découpage (220), sensiblement à la perpendiculaire de la face intérieure (224) de paroi de découpage, dans la direction de la zone intérieure (222) entourée.

3. Procédé selon la revendication 2, les orifices de pâte étant découpés par la paroi de découpage (220), la pâte découpée étant transportée à travers les orifices (232) dans la surface porteuse (230) vers l'intérieur du cylindre et la saillie (228) de la paroi de découpage (220) retenant la pâte découpée dans la zone intérieure (222) et empêchant ainsi que la pâte ne recoule hors de la zone intérieure (222).

4. Procédé selon l'une quelconque des revendications précédentes, comprenant par ailleurs :
le transport de la pâte découpée par le premier dispositif de découpage (200) au moyen d'un filetage de vis interne (210) ; et
le retour de la pâte découpée, de sorte qu'elle soit utilisée dans l'étape de la mise à disposition d'une bande de pâte sur un tapis roulant.

5. Procédé selon l'une quelconque des revendications précédentes, l'étape de la mise à disposition d'une bande de pâte sur un tapis roulant (120) comprenant :
le mélange de la matière première avec de l'eau, pour obtenir une masse pâteuse ;
le laminage de la masse pâteuse ; et
la dépose de la masse pâteuse laminée, pour créer la bande de pâte sur le tapis roulant (120).

6. Système, destiné à fabriquer des chips empilables pourvue de parties intérieures découpées, comprenant :
un tapis roulant (120) qui est apte à recevoir une bande de pâte ;
un premier dispositif de découpage (200), comprenant :
un cylindre, pourvu d'une surface porteuse (230) extérieure cylindrique, le cylindre comprenant une pluralité d'orifices (232) dans la zone de la surface porteuse (232) ; et
une pluralité de parois de découpage (220) closes, qui à partir de la surface porteuse (230) s'étendent vers l'extérieur, en s'éloignant du cylindre, chaque paroi de découpage (220) entourant respectivement une zone intérieure (222) qui communique avec au moins l'un des orifices (232) dans la surface porteuse (230) et une section transversale verticale englobant chacune des parois de découpage (220) ;
une face intérieure (224) de paroi de découpage qui fait face à la zone intérieure (222) entourée par la paroi de découpage (220) et qui s'étend sensiblement vers l'extérieur, en direction radiale par rapport à l'axe du cylindre ;
une face extérieure (226) de paroi de découpage qui est opposée à la zone intérieure (222) entourée par la paroi de découpage (220) et qui par rapport à la face intérieure (224) de paroi de découpage est inclinée de telle sorte que la face intérieure (224) de paroi de découpage et la face extérieure (226) de paroi de découpage coïncident en externe, par rapport à l'axe du cylindre (W1), pour former un bord de découpage, la face intérieure (224) de paroi de découpage et la face extérieure (226) de paroi de découpage incluant un angle (A) de 30° à 65°,
une saillie (228) qui s'étend du bord de découpage de la paroi de découpage (220), sensiblement à la perpendiculaire de la face intérieure (224) de paroi de découpage, dans la direction de la zone intérieure (222) entourée,
le cylindre étant logé en rotation et de telle sorte que la zone de découpage extérieure en direction radiale du premier dispositif de découpage (200) s'engage dans le tapis roulant (120) ;
un deuxième dispositif de découpage (140), pourvu d'un deuxième cylindre, qui par rapport à la direction de déplacement du tapis roulant (120) est placé en aval du premier cylindre et qui est adapté pour découper un contour d'une ébauche de chips empilable ;
un support de cuisson (160) mobile, qui comporte une pluralité de surfaces cylindriques voûtées, chacune pourvue de plusieurs trous et qui est adapté pour recevoir en continu les pâtons ayant le contour d'une ébauche de chips empilable, découpés par le premier dispositif de découpage (200) et le deuxième dispositif de découpage (140) sur la surface cylindrique voûtée ; et
une friteuse (150), le support de cuisson (160) étant adapté pour plonger dans la friteuse (150), de sorte que les pâtons découpés soient frits sur le support de cuisson (160) .

7. Système selon la revendication 6, la section transversale verticale de chacune des parois de découpage (220) comprenant par ailleurs :
un côté de maintien de la paroi de découpage (227), qui s'étend entre la face extérieure de la paroi de découpage (226) et la surface porteuse (230) du cylindre, un angle (B) entre le côté de maintien de la paroi de découpage (227) et la face intérieure (224) de paroi de découpage s'élevant à de 5° à 20°.

8. Système selon l'une quelconque des revendications 6 ou 7, la face intérieure (224) de paroi de découpage comprenant un revêtement antiadhésif.

9. Système selon l'une quelconque des revendications 6 à 8, le cylindre comprenant en interne un filetage de vis (210) qui est logé en rotation par rapport au cylindre.

10. Système selon l'une quelconque des revendications 6 à 9, comprenant par ailleurs :
un dispositif de production de bandes de pâte (110) qui est adapté pour mélanger une poudre contenant de l'amidon afin d'obtenir une masse de pâte, pour laminer la masse de pâte et pour déposer la masse de pâte laminée, pour créer la bande de pâte sur le tapis roulant (120).

11. Utilisation d'un système selon l'une quelconque des revendications 6 à 10 dans un procédé selon l'une quelconque des revendications 1 à 5.
